# EUROPÄISCHE PATENTSCHRIFT

(11) **EP 0 543 848 B1**
(45) Veröffentlichungstag und Bekanntmachung des Hinweises auf die Patenterteilung: **23.10.1996**
(21) Anmeldenummer: 91914141.6
(22) Anmeldetag: 06.08.1991
(51) Int. Cl.: H04N 1/00

(54) **BILD-VORLAGENCODIERUNG BEISPIELSWEISE FÜR TELEFAX UND FARBFERNSEHEN**
PICTURE CODING, FOR EXAMPLE FOR TELEFAX AND COLOUR TELEVISION
CODAGE D'IMAGES, PAR EXEMPLE POUR TELECOPIEURS ET POUR LA TELEVISION EN COULEURS

(30) Priorität: 07.08.1990 DE 4025034
(43) Veröffentlichungstag der Anmeldung: 02.06.1993
(73) Patentinhaber: Dirr, Josef, D-81679 München (DE)
(72) Erfinder: Dirr, Josef, D-81679 München (DE)
(86) Internationale Anmeldenummer: EP9101485
(87) Internationale Veröffentlichungsnummer: WO9117646

(56) Entgegenhaltungen:
- EP-A- 0 329 158
- DE-C- 3 330 845
- US-A- 4 121 259

## Beschreibung

### Technisches Gebiet:

Die vorliegende Erfindung befasst sich mit der Codierung und Übertragung von Bildern und Vorlagen , insbesondere für Telefax und für das Fernsehen, insbesondere für das Farbfernsehen.

### Stand der Technik:

Telefaxgeräte sind in Normgruppen in Abhängigkeit von der Übertragungszeit eingeteilt. Die Gruppen 1 und 2 mit einer Punkt für Punkt-Abtastung sind durch Geräte der Gruppe 3 bereits überholt. Letztere stellen ein digitales Übertragungssystem dar, bei dem die Bildabtastpunkte gleicher Helligkeit einer ununterbrochenen Folge zusammengefasst und zu einem Codewort vereinigt werden. Solche Verfahren werden eindimensional genannt. Das MHC-Verfahren ist ein solches. Das zweidimensionale Verfahren ist auf demselben Prinzip aufgebaut. Bei diesem wird zuerst eine Bezugszeile abgetastet und bei der folgenden Zeile nur jeweils die Abweichung gegenüber der Bezugszeile codiert. Das MRC-Verfahren arbeitet nach diesem Prinzip. Dann gibt es noch den MMR-Code, bei dem nach einer codierten Bezugszeile eine grössere Zahl von Folgezeilen zweidimensional codiert werden. Bei den Lauflängencodierungen ist für jede Zahl von Bildpunkten je Zeile ein besonderer Binärcode für weiss und schwarz festgelegt, z.B. 1 weiss = 000111, 1 schwarz = 010, 2 weiss = 0111, 2 schwarz = 11, ...20 weiss = 0001000, 20 schwarz = 00001101000. Eine solche Codierung geht bis zur Bildpunktzahl 63. Dann wird wieder von vorn mit einem zusätzlichen Abschnittscodewort für weiss und schwarz angefangen. Für die Übertragung dieser codierten Zahlen wird insbesondere die Phasendifferenz-bezw. Amplitudenphasendifferenzmodulation verwendet.

Bei der Grauabtastung wurden die Grauwerte in Graustufen unterteilt und in mehr oder weniger dichte Muster von schwarzen und weissen Bildpunkten umgesetzt. Damit wird, wie vom Dither-Druckverfahren bekannt ist, vom Auge eine entsprechende Grauabstufung wahrgenommen. Bei der Codierung von farbigen Bildern und Vorlagen waren bisher aufwendige Verfahren notwendig. Zum Teil ähnlich der Codierungen beim NTSC,PAL und SECAM-System.

### Darstellung der Erfindung:

Ein Nachteil dieser bekannten Verfahren ist bei Telefax die verhältnis lange Zeitdauer für die Übertragung und der grosse Aufwand für die Codierung und die erforderliche grosse Bandbreite, insbesondere bei der Codierung und Übertragung von farbigen Bildern. Da bisher mehrere Träger bei der Farbübertragung benötigt wurden, sind durch gegenseitige Beeinflussungen Störungen, wie z.B. Cross Colour, Cross Luminance aufgetreten.

Aufgabe der Erfindung ist es eine solche Codierung vorzusehen, dass die Information in kürzerer Zeit als bisher bei mindestens gleicher Übertragungssicherheit übertragen werden kann. Diese Aufgabe wird durch ein Verfahren gemäß Anspruch 1 gelöst. Kurze Beschreibung der Zeichnungen:
- Fig.1:: Übersichtsschaubild eines Telefaxgerätes.
- Fig.2 :: Ein Wechselstromcode bei dem die Kennzustände durch die Amplituden der Halbwellen markiert sind. Eine mehrwertige Codierung wird durch 2 um 90° phasenverschobene Wechselströme, die für die Übertragung addiert werden, erreicht.
- Fig.3 :: Ein mehrwertiger Wechselstromcode bei dem mehrere Summenwechselströme vorgesehen sind, deren Frequenz immer um die halbe Frequenz höher liegt als der Primärwechselstrom.
- Fig.4:: Ein Wechselstromcode, bei dem die Codierung durch die Periodendauern und die Amplitudengrösse der Halbwellen festgelegt wird.
- Fig.5:: Eine Übersicht von Phasensprüngen durch Periodendauern dargestellt.
- Fig.6:: Schaltung zur Erzeugung von Periodendauern und Amplitudenstufen.
- Fig.7:: Ein Schaubild der Addition von Phasenstufen.
- Fig.8:: Ein Vektordiagramm für die Darstellung von Phasensprüngen bei Änderung einer Amplitude bei um 90° phasenverschobener Wechselströme, bei Addition derselben.
- Fig.9:: Erzeugung von Amplitudenstufen.
- Fig.10:: Darstellung der Binärcodeelemente für 6 Zeilen für eine codemultiplexe Codierung.
- Fig.11+12:: Darstellung von Betriebskennzeichen bei Zusammenfassung mehrerer Zeilen.
- Fig.13:: Ein quaternärer Code.
- Fig.14:: Ein Farbfernsehempfänger für codemultiplexen Empfang.
- Fig.15:: Schwingungskurven für die Farbdifferenzsignale ohne und mit gleich stromvorspannung mit PAM- und Treppensignalen.
- Fig.16:: Vektordiagramm der Addition der Schwingugen Fig.15.
- Fig.17:: Vektordiagramm der Addition der SChwingungen der Fig.15 mit Gleichstromvorspannung.
- Fig.18:: Treppensignale für Farbdifferenz- und Y-Signal.
- Fig.19:: Vektordiagramm der QAM-modulierten Treppensignale der Fig.18
- Fig.20,21:: Ein schmalbandiger Informationskanal zwischen Fernsehkanälen.
- Fig.22:: Umsetzung der Treppensignale zweier Kanäle in einen Phasen-Amplitudencode.
Wege zur Ausführung der Erfindung:

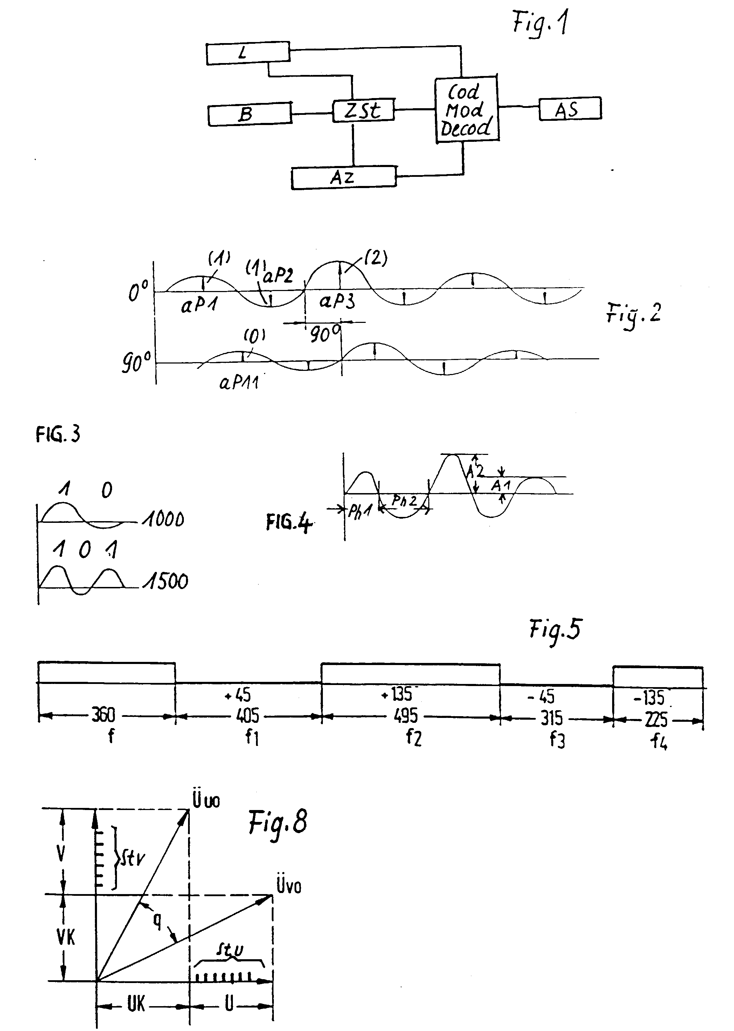

In der Fig.1 ist eine Übersicht eines Telefaxgerätes dargestellt.Die Leseeinheit L hat die Aufgabe, die zu übertragende Vorlage in analoge elektrische Signale umzuwandeln. Im Codierer Cod werden sie dann in digitale Signale umgesetzt. Für die Übertragung ist das Modem Mo vorgesehen. Die Anschalteeinheit AS übernimmt die Anpassung an das Fernsprechnetz.Die empfangenen Signale gelangen über die AS zum Decodierer Decod und werden in dieser Einheit wieder in die Ursprungsform zurückgebildet.In der Aufzeichnungseinheit Az erfolgt dann die Papieraufzeichnung. Eine zentrale Steuerung rung ZSt steuert das Fernkopiersystem und Koordiniert die Fernkopieübertragung. Vom Bedienfeld B erfolgt die Steuerung.

Bei der Erfindung geht es um die Codierung und Übertragung der Bildpunkte. Gemäss der Erfindung erfolgt eine Lauflängencodierung in der Weise, indem die jeweilige Zahl der weissen oder schwarzen Bildpunkte ziffernweise codiert wird. Werden z.B. 28 weisse Bildpunkte nacheinander abgetastet, so erfolgt eine Codierung 2 weiss und in der Folge 8 weiss. Werden in der Folge 6 schwarze Bildpunkte abgetastet, so wird die Ziffer 6 schwarz codiert. Es ist also ein Code für die Ziffern 0 bis 9 weiss und für die Ziffern 0 bis 9 schwarz erforderlich. Für diese Ziffern sind 20 Kombinationen erforderlich. Auf derselben Basis können natürlich auch die besonderen Kennzeichen, wie das Beginn- und das Endekennzeichen (EOL) oder das EOP, MCF oder sonstige Kriterien codiert werden. Für die Codierung dieser 20 Ziffern und der für den Betrieb erforderlichen Kriterien kann eine ganz einfache binäre oder eine mehrwertige Codierung vorgesehen werden.. Um 20 Kombinationen zu erhalten, sind 5 bit entsprechend dem Fernschreialphabet Nr.2 erforderlich. Man kann damit also 32 Kombinationen bezw. Kriterien codieren.Da höchstens 4-stellige Zahlen vorkommen, wenn z.B. je Zeile 1728 Bildpunkte vorhanden sind, kann man mit den übrigen Kombinationen auch 2-stellige Ziffern in der Weise codieren,indem man die vorkommenden Tausender mit den dazugehörigen Hundertern zu einem Code zusammenfasst, z.B. die Zahlen 10,11,12,...17.Für die Codierung von höchstens 1728 Bildpunkten kommt man dann mit 3 Codierungen aus. Eine Unterscheidung zwischen weiss und schwarz ist dabei nicht erforderlich, weil die folgenden Zifferncodierungen aussagen, ob die zweistellige Zahl zu weiss oder schwarz gehört. Sollen z.B. 1728 weisse Bildpunkte codiert werden, so wird zuerst 17 und in der Folge 2 weiss und 8 weiss codiert. Durch die 2 und 8 weiss ist bestimmt, dass die 17 zu weiss gehört. Nach der bestehendenNorm beginnte jede Zeile mit einer weissen Lauflänge. Diese Norm bleibt durch die Erfindung unberührt. Diese Erfindung kann auch beim MRC oder MMR-Code oder einem ähnlichen Code sowohl bei der Bezugszeile als auch bei den folgenden Zeilen mit den Abweichungen von der Bezugszeile verwendet werden,in dem die Zahl bezw. die Unterschiedszahl der Bildpunkte ebenfalls ziffernweise codiert werden.

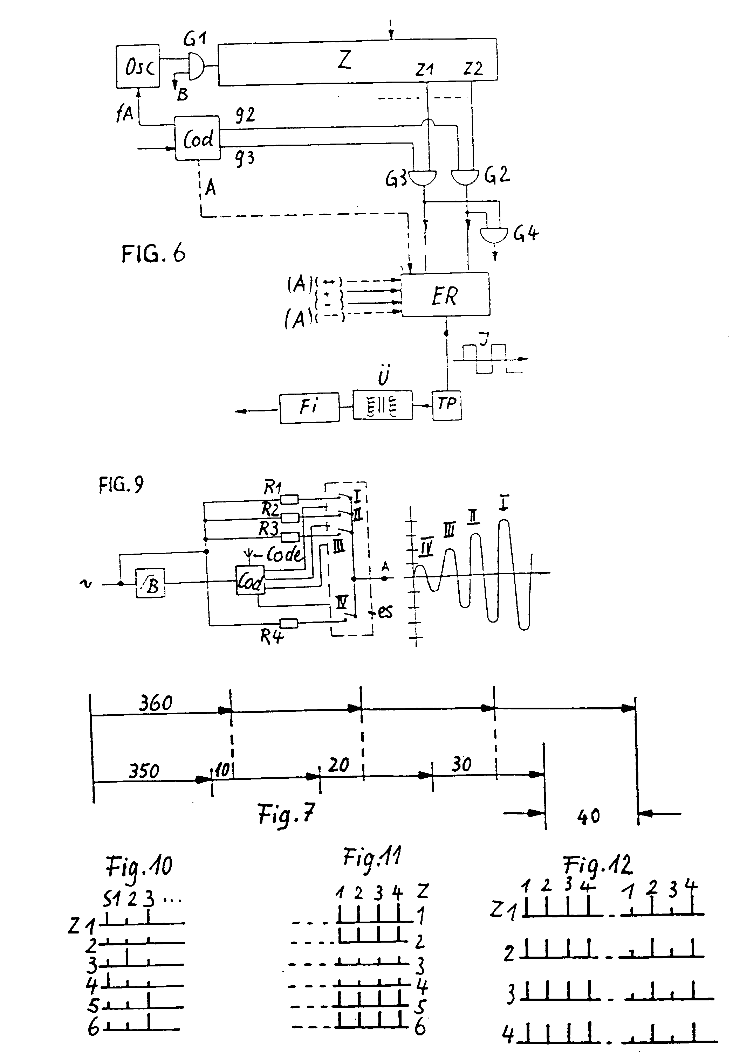

Da bei der Lauflängenmethode immer abwechselnd Zahlen für weiss und schwarz vorkommen, kann man auch zur Einsparung von Kombinationen zuerst alle weisse Zahlen und in der Folge in Abhängigkeit von einem Kriterium alle schwarze Zahlen mit demselben Code codieren. Allerdings muss dann jeder Lauflängenzahl dieselbe Zahl von Stellen zugeordnet werden. 1 Bildpunkt müsste dann mit 001, 12 Bildpunkte mit 012 codiert werden. Bei schwarz würde man schon mit 2 Stellen auskommen.Für die 3- und 4-stelligen Ausnahmen müsste dan ein eigenes zusätzliches Kriterium vorgesehen werden. Für die Übertragung selbst kann auch die bisher verwendete Phasendifferenz bezw. Amplituden-Phasendifferenzmodulation verwendet werden. Nachfolgend werden noch weitere Codierungen erläutert. In der Fig.2 ist ein duobinärer Halbwellencode dargestellt. Als Codeelemente dienen die Amplituden von Halbwellen - wenn Gleichstromfreiheit notwendig ist, wird man hierfür Perioden vorsehen - zweier um 90° phasenverschobener Wechselströme gleicher Frequenz. Für die Übertragung werden beide addiert, sodass bei der Übertragung nur ein Wechselstrom vorhanden ist. Die Kennzustände sind im Beispiel (0)=aP11,(1)=aP1,aP2,...(2)=aP3,..Mit diesem Prinzip kann die Bitzahl wesentlich erhöht werden, wenn man z.B. eine Anordnung nach der Fig.3 vorsieht. Es werden also ein oder mehrere Codierwechselströme vorgesehen, deren Frequenz bezw. Frequenzen jeweils um die Hälfte der ursprünglichen Frequenz zunimmt, z.B. bei einer Ursprungsfrequenz von 1000 Hz 1500 Hz. Für die Codierung können wieder 2 um 90° phasenverschobene Codierwechselströme mit 1500 Hz vorgesehen werden. Mit 2 Summencodier wechselströmen würde man mit einer Periode bezw. 1 1/2 Perioden 10 bit erzielen. Man kann auch einen Amplituden/Phasencode vorsehen,. In der Fig.4 ist ein solcher dargestellt. Die Phase ist durch die Halbwellen periodendauer und den Amplituden dieser Halbwellen sind 2 Kennzustände zugeordnet. Bei 2 Phasen- und 2 Amplitudenkennzuständen erhält man bei 2 Stellen 4 hoch 2 und bei 4 Stellen schon 4 hoch 4 Kombinationen. Zur Erlangung einer Gleichstromfreiheit, ist die positive und negative Halbwelle für einen Kennzustand erforderlich. Die Zahl der Phasenkennzustände ist auch ein übertragungstechnisches Problem, wobei die Laufzeit zu berücksichtigen ist. In der Fig.5 sind 5 Phasenkennzustände vorgesehen.Die normale Phase ist f= 360 Einheiten. Wird auf 405 Einheiten umgeschaltet, und bleibt diese Phasenverschiebung, so muss bei der nächsten Halbperiode bezw. Periode wieder auf eine Halbperioden- bezw. Periodendauer von 360 Einheiten umgeschaltet werden. Eine Schaltung wie solche Phasen/Amplitudencodierungen erzeugt werden können, ist in der Fig.6 dargestellt. Das Zählglied Z wird mit Impulsen einer vorbestimmten Frequenz, die im Oszillator Osc erzeugt werden, gesteuert. Mit den Ausgängen Z1,Z2,...wird dann die Halb- bezw. Periodendauer der zu erzeugenden Rechteckimpulse festgelegt. Die Steuerung welche Periodendauer bezw. welcher Ausgang zur Wirkung kommen soll, erfolgt mit dem Codierer Cod. Soll die Halb- bezw. Periodendauer des Ausganges Z1 wirksam werden, wird über g3 das Gatter G3 markiert. Wird der Ausgang Z1 erreicht, so wird das Gatter G3 wirksam und steuert damit das elektronische Relais ER. Über A wurde der Beginn des Rechteckimpulses gekennzeichnet. Die Amplitude des Rechteckimpulses wird durch die an ER über (A)(++),(+),(-),(--) angelegte Spannung festgelegt. Am Ausgang von ER erhält man dann Rechteckimpulse mit vorbestimmter Periodendauer und Amplitude. Will man für die Übertragung sinusähnliche Halbwellen so werden die Rechteckimpulse über einen Tiefpass TP, den Übertrager Ü und ggf. über ein Filter Fi auf die Leitung gegeben.

Wenn nur schmale Bänder bei höheren Frequenzen zur Verfügung stehen, ist es zweckmässig die Amplituden- und/oder die Phasenänderungen der Kennzustände stufenweise vorzunehmen, sodass man sehr schmale Frequenzbänder erhält. Ist z.B., wie in der Fig.7 dargestellt, die normale Phase bezw. Periodendauer 360 Einheiten und wird diese 4 mal um 10 Einheiten gekürzt, so ist bei der 4. Verkürzung ein Unterschied gegenüber den 4x360 Einheiten von 40 Einheiten. Aus f=1/T erhält man dann die Phasenstufenfrequenz, wenn man den 360 Einheiten eine bestimmte Zeit zuordnet. Wird nach den 4 verkürzten Periodendauern wieder auf die Normalperiodendauer von 360 Einheiten umgeschaltet, so bleibt eine laufende Phasenverschiebung von 40 Einheiten. In der Europäischen Patentanmeldung EP-A 0329 158 ist dies näher erläutert. Auf dieser Basis kann man eine vorteilhafte Codierung vornehmen, indem man z.B. 3 Phasensprünge - Normalphase, voreilende und nacheilende Phasenverschiebung - und 3 verschiedene Periodenzahlenlen vorsieht. In den Perioden sind dann zugleich die Phasensprungstufen enthalten. Nimmt man als Periodenzahlen 100, 150 und 200 und eine um 45° voreilende und nacheilende Phasenverschiebung, so hat man 9 Codierungsstufen. Bei 2 Stellen hat man bereits schon 9 hoch 2 Kombinationen, bei 3 Stellen 729 Kombinationen. Diesbezüglich gibt es verschiedene Variationen in Bezug auf Zahl und Phase. Die Änderung eines Kennzustandes wird im Beispiel durch eine Amplitudenänderung angezeigt. Die Amplitude kann natürlich auch als Stufe vorgesehen werden. Bei einem Phasensprung von 45° ergibt es bei 100 Perioden für jede Periode eine Phasenänderung von 0,45°. Wie beim Burst beim Fernsehen, ist beim Empfänger auch eine Vergleichsphase, hier kann es die Normalphase z.B. sein, erforderlich.Bei einer 64 KHz Kanalbandbreite wird man eine kleinere Periodenzahl vorsehen Die Frequenzänderung wird man zweckmässig beim Nulldurchgang vornehmen, auch Toleranzen können sowohl in der Periodenzahl als auch in der Phase zulassen werden.

Werden die Amplituden zweier um 90° phasenverschobener Codierwechselströme als die Kennzustände vorgesehen, so kann man auch hier jede Kennzustandsänderung durch eine Vielzahl von Amplitudenstufen vornehmen. Es ist bekannt, dass bei der Addition solcher Wechselströme bei Amplitudensprünge auch Phasensprünge entstehen. In der Fig.2 sind solche Codierwechselströme mit duobinärer Codierung dargestellt. In Fig.8 ist ein Vektordiagramm solcher Codierwechselströme mit binärer Codierung dargestellt. Die Kennzustände sind Uk+U und Uk, Vk+V und Vk. Bei einer Amplitudenänderung von q entstehen. Um solche zuvermeiden, werden die Amplitudenänderungen stufenweise durchgeführt, in der Fig. mit Stu und Stv bezeichnet. In der Fig.9 ist eine Schaltung zur Erzeugung solcher Stufen dargestellt. Im Beispiel erfolgt die Änderung mittels Widerstände R1,R2,..die mittels eines elektronischen Relais eS in die Wechselstromkreise eingeschaltet werden. Die Steuerung erfolgt dabei beim Nulldurchgang indem mittels eines Begrenzers B Synchronisierimpulse erzeugt werden, mit denen der Codierer, der das elektronische Relais schaltet, gesteuert wird.

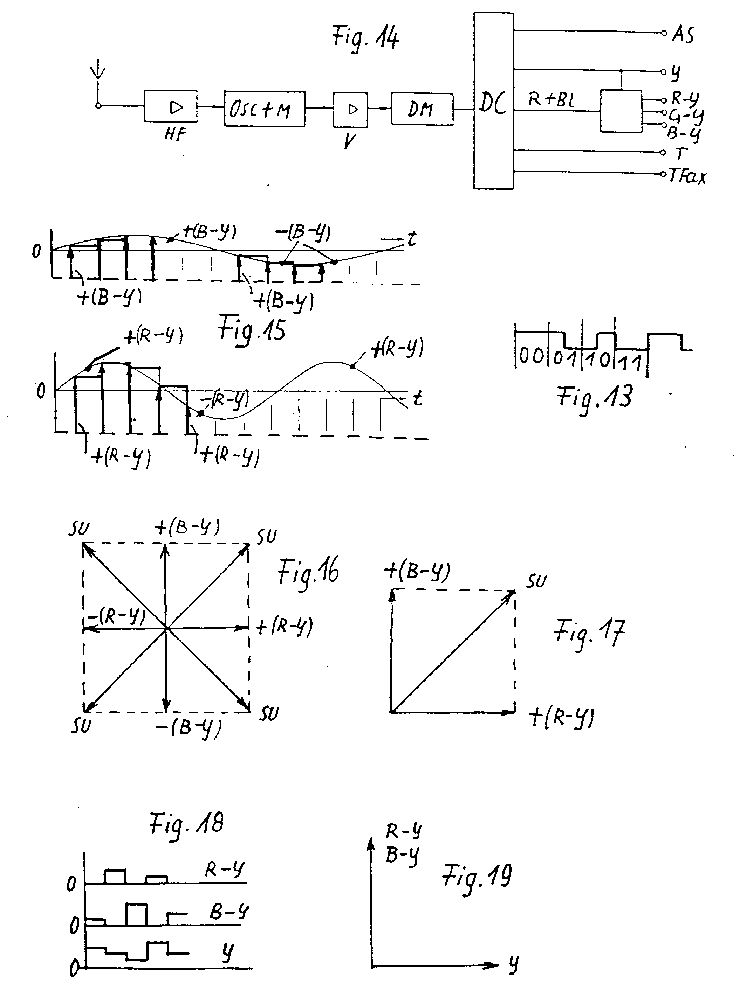

Für die Übertragung kann man auch mehrere Zeilen zusammenfassen und codemultiplex übertragen. Man könnte dann auch die EOL- und andere Zeichen auf die zusammengefassten Zeilen verteilen. Die codemultiplexe Zusammenfassung kann z.B. so erfolgen, indem man die Ziffern der einzelnen Zeilen binärcodiert, synchronisiert und parallel zusammenfasst und mit einem mehrwertigen Codewort vereinigt. In der Fig.10 sind 6 Zeilen nach dieser Methode zusammengefasst. Das Codewort S1 besteht dann aus den Binärcodeelementen 100100, S2 aus 001000, S3 aus 100011, usw. Das Beginn- und das Ende- als auch ggf. andere Kennzeichen kann man auf alle Zeilen verteilen. In der Fig.11 und 12 sind hierfür Beispiele dargestellt. Diese Kennzeichen können durch ein oder mehrere Parallelcodewörter markiert werden.In der Fig. 11 sind es 4x6 binäre Codeelemente.In der Fig.12 sind 4 Zeilen zusammenge fasst,wobei für das Beginn-und das Endekennzeichen 4x4 Codeelemente vorgesehen sind.Der letzten Zeile kann man auch einen besonderen Code zuordnen.Eine weitere Verkürzung der Übertragungszeit kann dadurch erreicht werden,indem man Zeilen gleicher Codierlänge oder ähnlicher Codierlänge codemultiplex unter Zwischenschaltung eines Speichers zusammenfasst,wobei für jede Zeile eine Zeilenmarkierung erforderlich ist.Bei DIN A4 Vorlagen sind es z.B.1100 Zeilen. Es müssen also 1100 Kombinationen für die Zeilencodierung vorgesehen werden.Diese können aber zugleich als EOL-Kennzeichen verwendet werden.Die codemultiplexe Zusammenfassung der Ziffern oder Zahlen erfolgt zweckmässig mit einer höherwertigen, z.B. quaternären oktonären, Codierung.In der Fig.13 ist ein Beispiel für eine quaternäre Codierung dargestellt. Für die Codierung von 256 Kombinationen sind 8 bit erforderlich, die mit 8 binären Codeelementen dargestellt werden können. Man kann auch die 8 Codeelemente zu 4 Dibit zusammenfassen, sodass nur 4 Codeelemente für die Codierung der 8 bit erforderlich sind. Bei dem Beispiel einer Zifferncodierung sind für 10 weisse, 10 schwarze für die Tausender und sonstigen Kennzeichen 32 Kombinationen, also 5 bit erforderlich. Bei einer quaternären Codierung wird man immer 2 Ziffern seriell oder parallel zusammenfassung, dass immer Dibits gebildet werden können. Bei einer 4-Stufencodierung erhält man dann bei 5 Stellen 4 hoch 5, also 1024 Kombinationen, also 10 bit. Werden in der Fig.2 binäre Halbwellencodeelemente vorgesehen, so sind bei beiden Codierwechselströmen jeweils 5 Halbwellen erforderlich. Alle Zeilen mit nur weiss können einen eigenen kurzen Code erhalten. Man kann auch ein Codewort den weissen Zeilen voransetzen und in der Folge dann nur die Zeilennummern der weissen Zeilen aufführen und am Ende der weissen Zeilen wieder ein besonderes Kennzeichen geben. Diese Methode der Übertragung der weissen Zeilen ist bei allen bekannten Codier- und Übertragungsverfahren anwendbar. Weisse Zeilen brauchen ja nicht ausgedruckt werden, sodass man auf der Empfangsstelle nur eine Weiterschaltung vornehmen muss. Solche elektronische Schaltungen sind von Schaltungen der elektronischen Schreibmaschinen bekannt, es wird deshalb nicht näher darauf eingegangen.

Bei der Vorlagen- und Bildübertragung ist es manchmal auch erforderlich Grauwerte zu codieren und zu übertragen. Bei einer bekannten diesbezüglichen Codierung werden die verschiedenen Graustufen ausschliesslich mit weissen und schwarzen Bildpunkten dargestellt. Dabei wird auf das aus der Drucktechnik bekannte Dither-Verfahren zurückgegriffen. Bei diesem werden die Graustufen in mehr oder weniger dichte Muster von weissen und schwarzen Bildpunkten umgesetzt. Die Abtasteinheit bewertet entsprechend den analogen Spannungswerten, die von der reflektierenden Fläche empfangen werden die Graustufen, z.B. 16, und speichert diese. Eine weisse Fläche entspricht dabei dem Grauwert 0 und eine schwarze dem Grauwert 16. Eine Codierung und Übertragung kann dabei wieder auf dem Prinzip der Lauflängen erfolgen, man kann auch die Stufen z.B.1,2,..16 codieren und übertragen, oder auch den jeweiligen analogen Wert. Zur Verkürzung der Übertragungszeit kann man 2 oder 3 Graustufen zu einem Codewort zusammenlegen. Der jeweilige Grauwert kann auch analog übertragen werden, indem man die Spannungswerte bezw. Impulse, die ja PAM-Impulsen entsprechen in Pulsdauern und mit Hilfe eines elektronischen Relais in Rechteckimpulse umwandelt. Die Länge des jeweiligen Rechteckimpulses entspricht dann der Höhe des abgegriffenen Spannungswertes. Über ein Filter kann man dann einen Codierwechselstrom herstellen. Die Halb- bezw. Periodendauer der Halbwellen beinhalten dann die Information. Dieses Prinzip ist in der europäischen Patentanmeldung EP-A-0 329 158 bereits offenbart.

Für die Codierung und Übertragung von farbigen Bildern und Vorlagen,z.B. für Telefax und das Farbfernsehen, sind bisher aufwendige Verfahren verwendet worden. Bei Telefax ist es zweckmässig die Farbauszüge der Grundfarben zu übertragen, weil vielfach das Papier beim Empfänger aus 3 aufeinanderliegenden Photoschichten besteht. Farbfernsehcodierungen sind von den NTSC-PAL- und SECAM-Systemen und von meinem Patent US-A- 4.675.721 und den Patentanmeldungen DE-A-3223312, DE-A-3226382 und DE-A-3709451 bekannt. Bei der vorliegenden Methode erfolgt die Übertragung aller die Farbübertragung betreffenden Signale mit nur einem Träger oder aber der Träger wird unmittelbar zur Informationscodierung vorgesehen.

Codiert und überträgt man nur die Farbauszüge, so sind für grün,rot und blau Grauwerte zu übertragen. Bei Telefax genügt dabei eine kleinere Stufenzahl - bei digitaler Codierung - als beim Fernsehen. Bei z.B. 16 Graustufen je Farbe könnte man also jeweils die 3 Werte der Grundfarben codemultiplex zusammenfassen. Hierfür sind 12 bit erforderlich, die mit den bereits aufgeführten Codes codiert werden können, wie z.B. mit dem Halbwellencode der Fig.2 oder mit einem Phasencode in Verbindung mit einer Periodenzahl oder Amplitudenstufen. Es kann auch die schmalbandige Codierung vorgesehen werden, wenn man z.B. Phasenstufen und/oder Amplitudenstufen und/oder Stufen in der Zahl von z.B. Perioden vorsieht. Diese Codierungen kann man natürlich auch verwenden, wenn man die Farbdifferenzsignale und das Luminanzsignal überträgt ggf. auch codemultiplex. Soll die codemultiplexe Information über Funk z.B. für Fernsehzwecke, übertragen werden, wo wird einfach der HF-Sender mit dem Codierwechselstrom moduliert. Der Empfänger ist dann wie ein Superhet-Radio-Empfänger ausgebildet, in Fig.14 ist ein solcher dargestellt. Nach dem Demodulator DM ist nur noch ein Decodierer DC erforderlich, Näheres geht aus der europäischen Patentanmeldung EP-A-0329158 hervor.

Bei den bisherigen Fernsehsystemen wuden z.B. die Farbsignale R-Y und B-Y analog auf je einen Träger gleicher Frequenz, die gegeneinander um 90° phasenverschoben waren, aufmoduliert. Je nach Polarität der jeweiligen Farbspannung hat der Träger entsprechende Phasensprünge gemacht. Beide Träger wurden für die Übertragung addiert. Der Summenvektor, der die Sättigung der Farbe darstellte, legte durch seinen Winkel im Farbkreis die Farbe fest. In der Fig.15 sind Analogsignale von R-Y und B-Y und in der Fig.16 ein dazugehöriges Vektordiagramm. Ein Nachteil einer solchen Übertragung ist, dass die kleinen Werte durch das Rauschen beeinträchtigt werden. Man kann durch eine Gleichstromvorspannung, in der Fig.15 gestrichelt eingezeichnet, die Spannungswerte nur positiv machen, sodass ein Vektordiagramm wie in der Fig.17 dargestellt, bei der Addition der Träger entsteht. Zweckmässig ist es wie bei der PAM die Farbsignale abzutasten und als Treppensignale auszubilden. Wird das Luminanzsignal ebenso synchron mit den Farbsignalen abgetastet, wobei die Farbsignale abwechselnd abgetastet werden, und Trägerwechselströmen, die gegeneinander um 90° phasenverschoben sind, aufmoduliert, so kann man bei einer Addition der Träger mit einem Wechselstrom das gesamte FBAS-Signal übertragen. In der Fig.18 sind die treppenförmigen PAM-Signale und in Fig.19 ein Vektordiagramm hierzu dargestellt. Bei einer Gleichstromvorspannung aller PAM-Impulse kann bei Vektoränderungen nie ein Phasensprung von 90° entstehen, wie auch der Fig.8 hervorgeht. Bei einer Zwischenspeicherung kann man die Impulse so mischen, dass auf 3 oder 4 Luminanzimpulsen 1 Farbimpulse kommt. Bei dieser Art der Codierung wird die Information durch die Grösse des Summenvektors und durch die Phasenlage desselben dargestellt. Ist ein schmales Frequenzband für die Übertragung erforderlich kann man die Methode der Fig.8 vorsehen.

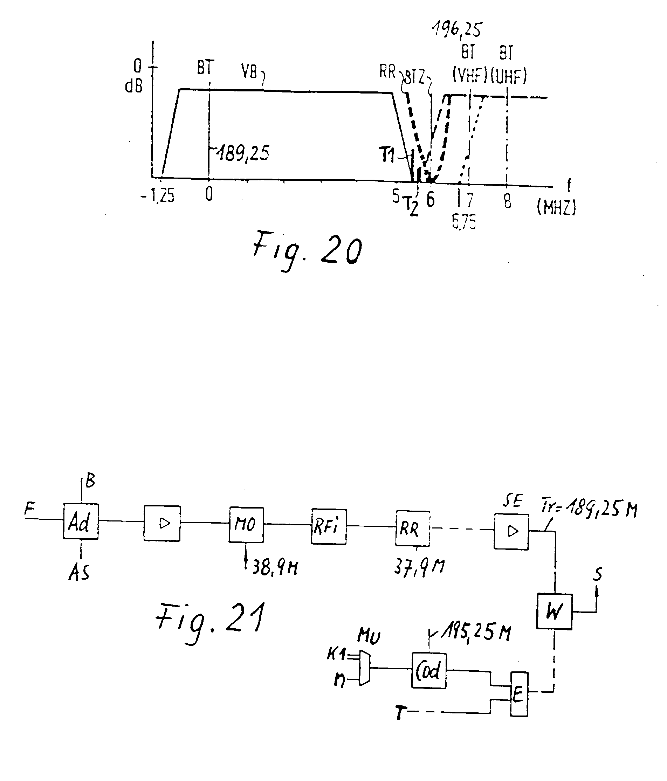

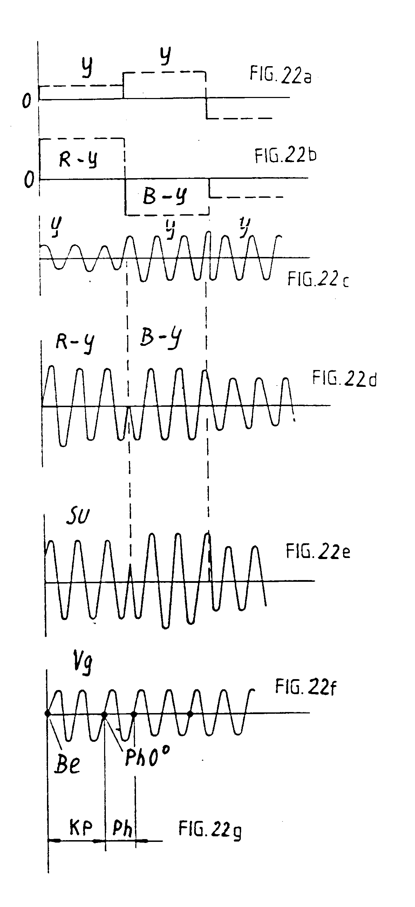

Telefax kann auch beim Fersehen für bestimmte Berufsgruppen eingeführt werden, z.B. für Rechtsanwälte um neue Grundsatzurteile zu erhalten, für Steuerberater, für Ärzte usw. Dies könnte z.B. in der Weise erfolgen, indem man den Tonkanal 2 für diese Zwecke vorsieht. Der NF-Ausgang dieses Kanals müsste an Buchsen gelegt werden, sodss jederzeit das Telefaxgerät angeschlossen werden könnte. Solch einen Anschluss könnte man auch gebührenpflichtig machen. Den Tonträger könnte man dann zugleich unmittelbar als Informationsträger schmalbandig codieren. - Natürlich könnte man auch die anderen bekannten frequenz- und zeitmultiplexverfahren für den 2. Tonkanal für Telefax verwenden.- Mit dem Tonträger kann soviel codiert werden, dass man ausser dem 2. Ton noch andere Informationen codieren kann. Werden z.B. je Codeelement 100 Perioden vorgesehen, so kann man bei einem Tonträger von 5,742 MHz 57420 Codeelemente machen. Man kann auch zwischen den Fernsehkanälen einen zusätzlichen Kanal in der Weise unterbringen, indem man zwischen dem Tonkanal 2 und dem folgenden Fernsehkanal einen Träger vorsieht, der zugleich zur schmalbandigen Phasen und/oder Amplituden und/oder unterschiedliche Vielzahl von Periodenhergenommen wird. Durch einen entsprechenden Reihenresonanzkreis kann man wie aus der Fig.20 ersichtlich ist, die Bandbreite für solch einen Träger freihalten. In der Fig. ist die Reihenresonanzskurve mit RR der Träger mit BTZ bezeichnet. In der Fig.21 ist die prinzipielle Anordnung eines schmalbandigen Kanals zwischen 2 Fernsehkanälen dargestellt. Dei Trägerfrequenz sei ca. 195,25 MHz. Kleine Frequenzschwankungen sind durch die stufenweisen Phasen- bezw. Amplitudenänderungen immer vorhanden. In der Offenlegungsschrift DE-A-4025026 ist dieses Prinzip bereits näher beschrieben.

In der Fig.22 ist eine Methode aufgezeigt, bei der die analoge oder digitale Information zweier Kanäle mit nur einem Wechselstrom übertragen werden kann. Im Beispiel sind es das Lumianzsignal Y und die Farbdifferenzsignale R-Y und B-Y. Das Y-Signal und die beiden Farbartsignale abwechselnd werden pulsamplidutenmoduliert und zu Treppensignalen geformt, was ja bereits bekannt ist. In den Fig.22a und 22b ist dies dargestellt. Beide de Signalfolgen werden je einem Trägerwechselstrom gleicher Frequenz,die jedoch gegeneinander um 90° phasenverschoben sind, aufmoduliert. Die Trägerfrequenz, im Beispiel Fig.22d, ist zweckmässig mit der Abgriffsfrequenz synchronisiert und ist ein ganzzahliges Vielfach der Abgriffsfrequenz.Die beiden Trägerwechselströme Fig.22c und 22d werden in der Folge addiert.Da bei entsteht ein Summenwechselstrom Su Fig.22e mit derselben Frequenz der beiden Träger. Bei der Modulation der Treppensignale auf die jeweiligen Trägerwechselströme, als auch bei der Addition der beiden Träger entstehen Phasensprünge. Diese Phasensprünge des Summenwechselstromes beinhalten in Verbindung mit der jeweiligen Amplitude die Information der Treppensignale der Fig.22a und 22b. Dieser Summenwechselstrom kann natürlich in dieser Form zur Empfangsstelle übertragen werden. Bei der Auswertung der Phasenlage ist ein Vergleichswechselstrom ähnlich dem Burst notwendig. Eine solche Auswertung ist z.B. vom PAL-System her bekannt.

Man kann auch mit kleinerer Frequenz die im Summenwechselstrom codierte Information übertragen. Bereits auf der Sendeseite wird ein Vergleichswechselstrom bereitgestellt, der im Beispiel dieselbe Normalphase wie der Träger der Fig.22d hat. In der Fig.22f ist dieser Vg dargestellt. Im Beispiel sind jedem Trepppensignal 3 Perioden der Träger zugeordnet. Die 3. Periode wird für die Phasenmessung vorgesehen, in der Fig.22f mit Ph bezeichnet. Die Summe der beiden Periodendauern in Fig.22g mit KP bezeichnet bleiben immer gleich. Sie enden mit dem 5. Nulldurchgang des Vergleichswechselstromes. Beim Summenwechselstrom beginnt die Messung mit dem 5. Nulldurchgang. Die Phasenverschiebung kann also von 0° bis 360° der Ph-Periode sein. Die Dauer KP+Ph kann dann unmittelbar oder mittelbar auf eine Halbperiode oder Periode eines Wechselstromes übertragen, ggf.unter Zwischenspeicherung, werden. Das Prinzip ist bereits in der Patentanmeldung DE P 3909079.5 offenbart. Dieses Prinzip kann auch mit einer Gleichstromvorspannung der - Treppensignale ausgeführt werden, wie es bereits bei den Fig.18,19 beschrieben wurde. Sobald die Frequenzänderungen dabei nur klein sind, kann man u. U. die Übertragung mit einer Frequenzmodulation vornehmen.

Die Information wird also im Beispiel der Fig.22 im Summenwechselstrom der Fig.22e durch die Phasenlage und die Amplitude dargestellt. Die jeweilige Amplitude wird unmittelbar am Summenwechselstrom abgenommen, während die Phasenlage über den Vergleichswechselstrom der Fig.22f ermittelt wird, wie bereits beschrieben.

## Patentansprüche

1. Verfahren zur Bildvorlagencodierung, beispielsweise für Telefax, dadurch gekennzeichnet, dass eine Verkürzung der Übertragungszeit bei weiss-schwarzen und Grauton-Bildvorlagen in der Weise erfolgt, daß bei weiss/schwarzen Bildvorlagen für die zahlenmässig erfassten Lauflängen und/oder der Bezugszeilen (MRC) und/ oder Abweichungen von der Bezugszeile (MRC,MMR) für weiss und schwarz dieselben Codewörter vorgesehen werden, dergestalt, dass die Abgriffsfolge weiss/ schwarz als Kriterium bei der Auswertung verwendet wird, und dass die Zahlen der Lauflängen ziffernweise codiert werden, und dass bei Grauwerten die quantisierten Bildpunktwerte entweder mit einem Analogcode oder mit einem Digitalcode übertragen werden und erst beim Empfänger nach dem Dither-verfahren umgeformt werden.

2. Verfahren nach Anspruch 1, dadurch gekennzeichnet, dass farbige Bilder und Vorlagen in der Weise codiert werden, indem entweder die Farbauszüge der 3 Grundfarben (rt,bl.gr) oder das Luminanz- und die Farbdifferenz oder gleichwertige Signale in synchrone vorzugsweise unipolare PAM-Impulse umgewandelt und vorzugsweise zu Rechteckimpulsen bezw. Treppensignalen geformt und so gemischt werden, dass sie ggf. zyklisch vertauscht 2 Codierwechselströme ergeben (Fig.18,19), wobei diese entweder unmittelbar ggf. durch Filter zu sinusförmigen Wechselströmen, die gegeneinander um 90 Grad phasenverschoben werden, geformt, für die Übertragung addiert werden, oder mittelbar,indem die beiden Codierwechselströme zwei Trägerwechselströmen mehrfacher Frequenz, die gegeneinander um 90° phasenverschoben sind, aufmoduliert und in der Folge addiert werden, oder dass alle Signale, vorzugsweise binär codiert, codemultiplex zusammengefasst werden, und dass bedarfsweise eine schmalbandige Übertragung in der Weise erfolgt, indem die Phasensprünge bezw. die Phasendifferenzen und/oder die Amplitudenunterschiede und/ oder die Zahl der Elemente wie Perioden in eine Vielzahl von Phasenstufen (Fig.7) und/oder Amplitudenstufen (Fig.8,9) und/oder in eine Vervielfachung der Elemetezahl, insbesondere Periodenzahl um gewandelt werden, wobei bedarfsweise der Sendewechselstrom als Codierwechselstrom vorgesehen wird.

3. Verfahren nach Anspruch 1, dadurch gekennzeichnet, dass die Grauwerte bezw. Grautöne entsprechend ihren analogen Spannungswerten in einen analogen Amplituden oder Phasen- oder Periodenzahlcode oder digital entsprechend der vorbestimmten Stufenzahl codiert werden, wobei die Umsetzung entsprechend dem Dither-Verfahren in der Empfangsstelle erfolgt, für die Übertragung können bei Bedarf codemultiplex mehrere Graubildpunkte zusammengefasst werden.

4. Verfahren nach den Ansprüchen 1 bis 3, dadurch gekennzeichnet, dass ein mehrwertiger Code in der Weise gebildet wird, indem in die Amplituden der Halbwellen bezw. Perioden eines Wechselstromes die Kennzustände, analog oder digital, gelegt werden, dass 2 solcher Codierwechselströme, die gegeneinander um 90° phasenverschoben sind, addiert werden (Fig.2), dass bei Bedarf mehrere solcher Codierwechselströme addiert vorgesehen werden, deren Frequenzen jeweils um die halbe Frequenz höher liegen als die Ursprungsfrequenz (Fig.3,1500), wobei erforderlichenfalls die Kennzustände stufenweise geschaltet werden (Fig.8).

5. Verfahren nach den Ansprüchen 1 bis 3, dadurch gekennzeichnet, dass eine analoge oder digitale Phasen/Amplitudencodierung in der Weise vorgesehen ist, indem ein elektronisches Relais vorgesehen wirnd (Fig.6, ER) mit Eingängen für die Steuerung der Periodendauer von am Ausgang zu erhaltenden Rechteckimpulsen (Fig.6,J) wobei synchron elektronische Kontakte geschaltet werden, die eine vorbestimmte Amplitudenspannung anschalten (Fig.6,(A)), weiterhin sind Mittel vorgesehen, die aus der Folge der Rechteckimpulse einen sinusförmigen Wechselstrom machen (Fig.4).

6. Verfahren nach den Ansprüchen 1 bis 3, dadurch gekennzeichnet, dass ein oder mehrere Codeelemente mehrerer Zeilen codemultiplex zusammengefasst werden, wobei bedarfsweise die Betriebskriterien,wie EOL auf alle Zeilen verteilt werden.

7. Verfahren nach den Ansprüchen 1 bis 3, dadurch gekennzeichnet, dass Zeilen mit nur gleichen Bildpunktwertigkeiten oder beinahegleiche Zahl von Bildpunktziffern in Gruppen zusammengefasst und zeilenweise oder mehrere Zeilen codemultiplex zusammengefasst, übertragen werden wobei jeder Zeile entsprechend ihrer Lage beim Abgriff ein Code zugeordnet wird, dieser kann bedarfsweise zugleich als Betriebskriterium (EOL) vorgesehen werden oder dass Zeilen gleicher Bildpunktzahl beispielsweise nur weisse Bildpunkte, nur durch ihren Nummerncode in einer Folge übertragen werden, wobei nur der Anfang und das Ende einer solchen Zeilen folge durch ein besonderes Kriterium markiert wird.

8. Verfahren nach Anspruch 2, dadurch gekennzeichnet, dass die pulamplitudenmodulierten Grundfarben binär codiert und codemultiplex zusammengefasst werden oder dass jeweils 2 der 3 Grundfarben nach vorbestimmten Zyklus ggf. unter Verwendung von Treppensignalen und Filtern, zu 2 um 90° phasenverschobenen Codierwechselströmen zusammengefasst werden und zu einem Summenwechselstrom addiert werden, wobei bedarfsweise den PAM-Impulsen bezw. den Treppensignalen eine Gleichstromvorspannung zugeordnet wird.

9. Verfahren nach Anspruch 2, dadurch gekennzeichnet, dass das Luminanzsignal und die Farbartsignale abwechselnd pulsamplitudenmoduliert und in Treppenimpulse bezw. Rechteckimpulse umgewandelt werden (Fig.18), dass die Farbartsignale und das Luminanzsignal je einem Träger derselben Frequenz aufmoduliert wird, wobei die Träger gegeneinander um 90° phasenverschoben sind, für die Übertragung werden dabei die Träger addiert, erforderlichenfalls werden den PAM- oder Treppensignalen eine solche Gleichvorspannug zugeordnet, dass die PAM- oder Treppenimpulse nur positiv sind. (Fig.17,19).

10. Verfahren nach Anspruch 2, dadurch gekennzeichnet, dass das Luminanz- und die Farbartsignale oder die Grundfarbensignale in vorbestimmten Zyklus pulsamplitudenmoduliert werden und in der Folge zu Treppensignalen so umgeformt werden, dass 2 ununterbrochene Folgen entstehen (Fig.22a,22b), weiterhin sind 2 Trägerwechselströme derselben Frequenz, jedoch gegeneinander um 90° phasenverschoben vorgesehen, von denen einer synchron mit der Abgriffsfrequenz geschaltet ist und die ein ganzzahlig vielfache Frequenz der Abgriffsfrequenz aufweisen und die für die Weiterverwertung addiert werden (Fig.22e), weiterhin ist ein Vergleichswechselstrom mit der Frequenz der Träger, synchron mit den Abgriffen geschaltet, von dem die letzte Periode im Bereich des jeweiligen Treppensignales mit der entsprechenden letzten Periode des Summenwechselstromes phasenmässig verglichen wird und damit die Periodendauer des zu übertragenden Codierwechselstromes festgelegt wird (KP+Ph), wobei die jeweilige Amplitude des Summenwechselstromes die Amplitude des Codierwechselstromes ist.

11. Verfahren nach Anspruch 1, dadurch gekennzeichnet, dass ein Fernsehkanal für eine Telefaxübertragung vorgesehen wird, wobei beim Fernsehempfänger Abnehmerbuchsen für den Anschluss eines Telefaxgerätes verwendet werden, an die die decodierte Telefaxinformation angeschaltet wird.

12. Verfahren nach Anspruch 11, dadurch gekennzeichnet, dass ein Reihenresonanzkreis mit einer solchen Resonanzfrequenz verwendet wird (Fig.20,21, RR), dass eine Frequenzlücke zwischen den Tonkanälen und dem folgenden Luminanzfrequenzband entsteht und dass in dieser Lücke ein Codierwechselstrom, schmalbandig codiert, untergebracht wird.

## Claims

1. A method of image original encoding, for example for telefax, characterised in that a reduction in the transmission time in relation to white-black and grey tone image originals is effected in such a way that the same code words are provided in the case of white/black image originals for the numerically determined run lengths and/or the reference lines (MRC) and/or deviations from the reference line (MRC, MMR), for white and black, in such a way that the pick-up sequence white/black is used as a criterion in the evaluation operation, and that the numbers of the run lengths are digitally encoded, and that in the case of grey values the quantised pixel values are transmitted either with an analog code or with a digital code and are only converted at the receiver on the basis of the dither method.

2. A method according to claim 1 characterised in that coloured images and originals are encoded in such a way that either the colour component images of the three primary colours (red, blue, green) or the luminance and the colour difference or equivalent signals are converted into synchronous, preferably unipolar PAM-pulses and preferably shaped to form rectangular pulses or step signals and are so mixed that they produce possibly in cyclically interchanged manner two encoding alternating currents (Figures 18, 19), wherein they are either directly shaped possibly by filters to form sinusoidal alternating currents which are phase-shifted through 90° relative to each other, and added for transmission, or indirectly, in that the two encoding alternating currents are modulated on to two carrier alternating currents of multiple frequencies which are phase-shifted through 90° relative to each other and subsequently added, or that all signals, preferably in binary coded form, are combined in code-multiplex manner, and that if necessary a narrow-band transmission is effected by the phase jumps or the phase differences and/or the amplitude differences and/or the number of elements such as periods being converted into a plurality of phase steps (Figure 7) and/or amplitude steps (Figures 8, 9) and/or into a multiplication of the number of elements, in particular the number of periods, wherein if necessary the transmission alternating current is provided as the encoding alternating current.

3. A method according to claim 1 characterised in that the grey values or grey tones are encoded in accordance with their analog voltage values into an analog amplitude or phase or period number code or digitally in accordance with the predetermined step number, wherein conversion is effected in accordance with the dither method at the receiving location, and if necessary a plurality of grey pixels can be assembled in code-multiplex manner for the transmission.

4. A method according to claims 1 to 3 characterised in that a multivalent code is formed in that the significant conditions are put, in analog or digital form, into the amplitudes of the half-waves or periods of an alternating current, that two such encoding alternating currents which are phase-shifted through 90° relative to each other are added (Figure 2), that if necessary a plurality of such encoding alternating currents are provided added, whose frequencies are each higher by half the frequency than the original frequency (Figure 3, 1500), wherein if necessary the significant conditions are switched in a step-wise manner (Figure 8).

5. A method according to claims 1 to 3 characterised in that analog or digital phase/amplitude encoding is provided in that an electronic relay is provided (Figure 6, ER), having inputs for control of the period durations of rectangular pulses to be obtained at the output (Figure 6, J), wherein electronic contacts are synchronously switched, which switch on a predetermined amplitude voltage (Figure 6, (A)), and there are further provided means which make a sinusoidal alternating current from the succession of the rectangular pulses (Figure 4).

6. A method according to claims 1 to 3 characterised in that one or more code elements of a plurality of lines are combined together in code-multiplex manner, wherein if necessary the operating criteria such as EDL are distributed to all lines.

7. A method according to claims 1 to 3 characterised in that lines with only identical pixel valencies or an almost identical number of pixel digits are combined together in groups and combined line-wise or as a plurality of lines in code-multiplex manner, are transmitted, wherein a code is associated with each line in accordance with its position in the pick-up, it can if necessary be provided at the same time as an operating criterion (EOL), or that lines of the same pixel number, for example only white pixels, are transmitted only by their number code in a sequence, wherein only the beginning and the end of such a line sequence is marked by a particular criterion.

8. A method according to claim 2 characterised in that the pulse amplitude-modulated primary colours are combined together in binary coded form and in code-multiplex manner or that each two of the three primary colours are combined together in accordance with a predetermined cycle possibly using step signals and filters, to form two encoding alternating currents which are phase-shifted through 90°, and they are added to form a sum alternating current, wherein if necessary a dc bias voltage is associated with the PAM-pulses or the step signals.

9. A method according to claim 2 characterised in that the luminance signal and the chrominance signal are alternately pulse amplitude modulated and converted into step pulses or rectangular pulses (Figure 18), that the chrominance signals and the luminance signal are each modulated on to a respective carrier of the same frequency, wherein the carriers are phase-shifted through 90° relative to each other, in that case for the transmission the carriers are added, and if necessary such a dc biasing voltage is associated with the PAM or step signals that the PAM or step pulses are only positive (Figures 17, 19).

10. A method according to claim 2 characterised in that the luminance or the chrominance signals or the primary colour signals are pulse amplitude modulated in a predetermined cycle and are so shaped in succession to form step signals that there are two uninterrupted sequences (Figures 22a, 22b), in addition there are two carrier alternating currents of the same frequency but phase-shifted through 90° relative to each other, of which one is switched synchronously with the pick-up frequency and which have a frequency that is an integral multiple of the pick-up frequency and which are added for further utilisation (Figure 22e), in addition a comparison alternating current with the frequency of the carriers is switched synchronously with the pick-ups, of which the last period in the region of the respective step signal is compared to the corresponding last period of the sum alternating current in respect of phase and thereby the period duration of the encoding alternating current to be transmitted is established (KP+Ph), wherein the respective amplitude of the sum alternating current is the amplitude of the encoding alternating current.

11. A method according to claim 1 characterised in that a television channel is provided for a telefax transmission, wherein customer sockets for the connection of a telefax unit, to which the decoded telefax information is connected, are used in the television receiver.

12. A method according to claim 11 characterised in that a series resonance circuit with such a resonance frequency (Figures 20, 21, RR) is used that there is a frequency gap between the sound channels and the following luminance frequency band and that an encoding alternating current, in narrow-band encoded form, is disposed in said gap.

## Revendications

1. Procédé de codage d'images, par exemple pour télécopieurs, caractérisé par le fait qu'un raccourcissement de la durée de transmission, dans le cas d'images en noir et blanc et en grisé, est obtenu de manière telle que pour des images en noir et blanc, pour les durées de parcours digitalisées et/ou des lignes de référence (MRC) pour le blanc et pour le noir et/ou des écarts de la ligne de référence (MRC, MMR) pour le blanc et le noir, les mêmes mots de code sont prévus, de manière telle que la séquence de balayage blanc/noir est utilisé comme critère lors de l'interprétation, par le fait que les nombres des durées de parcours sont codées par voie digitale, et par le fait que pour les tons grisés, les valeurs de pixel quantifiées sont transmises soit au moyen d'un code analogique, soit au moyen d'un code digital et ne sont transformées que chez le récepteur par le procédé de Dither.

2. Procédé de codage d'images, caractérisé par le fait que des images en couleurs sont codées de manière telle que soit les extraits de couleurs des trois couleurs fondamentales (rouge, bleu, vert) soit la luminance et la différence de couleur ou des signaux équivalents sont convertis en impulsions PAM synchrones de préférence unipolaires et sont de préférence formés en impulsions rectangulaires ou en signaux en gradins et sont mélangés de manière telle que, le cas échéant intervertis de manière cyclique, ils donnent naissance à deux courants alternatifs de codage (Figs. 18, 19), ces derniers étant convertis soit directement le cas échéant par des filtres en des courants alternatifs sinusoïdaux déphasés mutuellement de 90 degrés, sont additionnés pour la transmission, soit indirectement par le fait que les deux courants alternatifs de codage sont modulés par deux courants alternatifs porteurs de fréquence multiple déphasés l'un par rapport à l'autre de 90 degrés et sont additionnés en séquence, ou par le fait que tous les signaux de préférence codés en binaire sont réunis en codemultiplex, et qu'au besoin une transmission en bande étroite a lieu de manière telle que les sauts de phase ou les différences de phase et/ou les différences d'amplitude et/ou le nombre des éléments tels que les périodes sont convertis en une multiplicité de niveaux de phase (Fig. 7) et/ou de niveaux d'amplitude (Figs. 8, 9) et/ou en une multiplication du nombre d'éléments, notamment du nombre de périodes, opération ou au besoin le courant alternatif, d'émission et utilisé comme courant alternatif de codage.

3. Procédé de codage d'images, caractérisé par le fait que les valeurs de gris ou les grisés sont conformément à leurs valeurs de tension analogiques sont codés en un code analogique d'amplitude ou de phase ou de nombre de périodes ou en un code digital conformément au nombre de niveaux de consigne, la conversion ayant lieu dans le récepteur selon le procédé de Dither, tandis que pour la transmission il est possible au besoin de réunir en codemultiplex plusieurs pixels de gris.

4. Procédé de codage d'images suivant les revendications de 1 à 3, caractérisé par le fait qu'un code polyvalent est formé de manière telle que dans les amplitudes des demi-ondes ou des périodes d'un courants alternatif sont placés par voie analogique ou digitale des états caractéristiques, que deux de ces courants alternatifs de codage déphasés de 90 degrés l'un par rapport à l'autre sont additionnés (Fig. 2), qu'au besoin plusieurs de ces courants alternatifs de codage additionnés sont prévus, courants dont les fréquences sont chaque fois supérieures d'une de-fréquence à la fréquence de base (Fig. 3, 1500), opération où au besoin, les états caractéristiques sont couplés en gradins (Fig. 8).

5. Procédé de codage d'images suivant les revendications 1 à 3, caractérisé par le fait qu'un codage phase/amplitude analogique ou digital est prévu de manière telle qu'un relais électronique est prévu (Fig. 6, ER) avec es entrées pour la commande de la durée de période d'impulsions rectangulaires (Fig. 6, J) obtenues à la sortie, tandis qu'en synchronisme sont commandés des contacts électroniques qui injectent une tension d'amplitude de valeurs déterminée (Fig. 6, (A)), tandis qu'en outre des moyens sont prévus qui convertissent un courant alternatif sinusoïdal la succession des impulsions rectangulaires (Fig. 4).

6. Procédé de codage d'images suivant les revendications 1 à 3, caractérisé par le fait qu'un ou plusieurs éléments de code de plusieurs lignes sont réunis en multiplex, opération lors de laquelle au besoin les critères d'exploitation, tels que EOL, sont répartis sur toutes les lignes.

7. Procédé de codage d'images suivant les revendications 1 à 3, caractérisé par le fait que des lignes à valeurs de pixel égales ou avec un nombre sensiblement identique de chiffres de pixel sont réunies en groupes et par ligne ou par plusieurs lignes réunis en multiplex sont transmises et où à chaque ligne, selon sa position lors du balayage, est associé un code lequel au besoin peut également constituer le critère d'exploitation (EOL) ou encore que des lignes à même nombre de pixels, par exemple uniquement des pixels blancs, sont transmises uniquement par leur code numérique en une succession où seul le début et la fin d'une telle ligne sont marqués par un critère particulier.

8. Procédé suivant la revendication 2, caractérisé par le fait que les couleurs fondamentales modulées en impulsions d'amplitude sont codées en binaire et sont réunies en codemultiplex, et que chaque fois deux des trois couleurs fondamentales sont combinées suivant un cycle déterminé d'avance avec utilisation de signaux en gradins et de filtres pour donner naissance à deux courants alternatifs déphasés de 90° et sont additionnés en un courant alternatif de sommation, opération au cours de laquelle en cas de besoin une tension préalable continue est associée aux impulsions PAM ou aux signaux en gradins.

9. Procédé suivant la revendication 2, caractérisé en ce que le signal de luminance et les signaux de ton de couleur sont alternativement modulés en impulsions d'amplitude et en impulsions en gradins ou impulsions rectangulaires (Fig. 18), en ce que les signaux de ton de couleur et le signal de luminance sont chacun modulés sur un porteur de la même fréquence, les porteurs étant déphasés de 90° l'un par rapport à l'autre, les porteurs étant additionnés pour la transmission et le cas échéant il est associé aux signaux PAM ou en gradins une tension préalable telle que les signaux PAM ou les impulsions en gradins sont exclusivement positifs (Figs. 17, 18).

10. Procédé suivant la revendication 2, caractérisé en ce que le signal de luminance et les signaux de ton de couleur ou les signaux des couleurs fondamentales sont modulés en impulsions d'amplitude dans un cycle déterminé d'avance et sont ensuite transformés en signaux en gradins de manière telle que deux séries non interrompues sont engendrées, en ce qu'en outre deux courants alternatifs porteurs de même fréquence mais déphasés de 90° l'un par rapport à l'autre sont prévus, dont l'un est couplé en synchronisme avec la fréquence de prélèvement et qui présentent une fréquence d'un multiple entier de la fréquence de prélèvement et qui sont additionnés aux fins d'un traitement ultérieur (Fig. 22e), en ce qu'en outre est connecté de manière synchrone aux prélèvements un courant alternatif ayant la fréquence des porteurs, courant dont la période terminale dans la région du signal en gradins intéressé est comparée, quant à la phase, à la période terminale correspondante du courant alternatif de sommation de sorte qu'est ainsi fixée la durée de période du courant alternatif de codage ( KP + ph) à transmettre, l'amplitude instantanée du courant alternatif de sommation étant l'amplitude du courant alternatif de codage.

11. Procédé suivant la revendication 1, caractérisé en ce qu'un canal de télévision est prévu pour une transmission de télécopie, le récepteur de télévision étant doté de douilles pour la connexion d'un télécopieur à l'information de télécopie décodée.

12. Procédé suivant la revendication 11, caractérisé en ce qu'il est utilisé un circuit série de résonance avec une fréquence de résonance telle (Fig. 20, 21, RR), qu'il est obtenu un intervalle de fréquence entre les canaux de son et la bande de fréquence de luminance suivante, et en ce que dans cet intervalle est placé un courant alternatif de codage codé en bande étroite.
